# EUROPÄISCHE PATENTSCHRIFT

(11) **EP 2 746 102 B1**
(45) Veröffentlichungstag und Bekanntmachung des Hinweises auf die Patenterteilung: **25.10.2017**
(21) Anmeldenummer: 13197034.5
(22) Anmeldetag: 12.12.2013
(51) Int. Cl.: B60N 2/50, B60N 2/06, B60N 2/14

(54) **Nutzfahrzeugsitz mit integrierter Drehverstelleinrichtung**
Commercial vehicle seat with integrated rotating adjustment device
Siège de véhicule utilitaire avec dispositif de réglage rotatif intégré

(30) Priorität: 18.12.2012 DE 102012112527
(43) Veröffentlichungstag der Anmeldung: 25.06.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A2- 2 213 504
- DE-A1-102010 017 328
- JP-A- 2002 211 284
- US-A1- 2008 211 284
- US-B2- 6 557 919

## Beschreibung

Die Erfindung betrifft einen Nutzfahrzeugsitz mit einem Sitzteil, mit einem Rückenlehnenteil und mit einem Sitzunterbau zum Anordnen an einem Karosserieteil eines Nutzfahrzeugs, bei welchem der Sitzunterbau eine eine Wälzkörperlagereinheit aufweisende Drehverstelleinrichtung zum Drehen zumindest des Sitzteils um eine Hochachse in Drehverstellrichtungen, eine Längsverstelleinrichtung mit zwei voneinander beabstandet angeordneten Längsschieneneinheiten zum Verstellen zumindest des Sitzteils in Längsverstellrichtungen und eine Querverstelleinrichtung mit zwei voneinander beabstandet angeordneten Querschieneneinheiten zum Verstellen zumindest des Sitzteils in Querverstellrichtungen umfasst.

Gattungsgemäße Fahrzeugsitze sind aus dem Stand der Technik gut bekannt. Insbesondere Fahrzeugsitze von Fahrzeugen aus dem Off-Road-Bereich, wie beispielsweise auch Nutzfahrzeuge, zeichnen sich oftmals durch eine Vielzahl an unterschiedlichen Sitzverstellmodulen beispielsweise hinsichtlich einer Längshorizontalfederung, einer Querhorizontalfederung und/oder einer Dreheinrichtung aus, um einen möglichst hohen Fahrgastkomfort zu bieten. Derartige Sitzverstellmodule sind meistens nicht Bestandteil einer Grundausstattung, können aber fast immer modular als optionale Komfort- und/oder Ausstattungskomponenten zugekauft werden. Der hierdurch bedingte modulare Aufbau hat jedoch auch den Nachteil, dass ein Sitzunterbau eines mit allen vorgenannten Sitzverstellmodulen ausgestatteten Fahrzeugsitzes bezogen auf die Sitzhöhe sehr hoch baut. Dies hat zur Folge, dass mit diesen Sitzerstellmodulen komplett ausgestattete Fahrzeugsitze nur für bestimmte Fahrzeugtypen in Frage kommen. In den meisten Anwendungsfällen bauen diese komplett ausgestatteten Fahrzeugsitze jedoch zu hoch, um speziell in kleineren Fahrzeugen verbaut werden zu können. Zudem haben insbesondere auch kleiner Fahrgäste häufig Probleme Bedienelemente des Fahrzeuges bequem zu erreichen und betriebssicher zu bedienen. Aus den vorgenannten Gründen ist der Einsatzbereich derartig komplett ausgestatteter Fahrzeugsitze stark eingeschränkt, sodass diese für bestimmte Fahrzeugtypen nachteilig erst gar nicht angeboten werden können.
Aus der US 6 557 919 B2 ist ein Sitz bekannt, der gesundheitlich eingeschränkten Personen das Aussteigen aus dem Auto erleichtern soll. Dafür verfügt der Sitz über eine Drehverstelleinrichtung sowie eine Längsschieneneinrichtung und eine Querschieneneinrichtung, die miteinander gekoppelt sein können und zunächst eine Rotation des Sitzes, dann eine Längsverstellung in Richtung einer Tür und schließlich eine Verstellung in Richtung der Seite des Autos erlauben. Die Drehverstellvorrichtung ist zumindest teilweise außerhalb der Umrisse der Querschieneneinheiten angeordnet, was den Sitz relativ sperrig gestaltet.
Es ist Aufgabe der Erfindung, zumindest die vorstehend genannten Nachteile zu überwinden. Die Aufgabe der Erfindung wird von einem Nutzfahrzeugsitz mit einem Sitzteil, mit einem Rückenlehnenteil und mit einem Sitzunterbau zum Anordnen an einem Karosserieteil eines Nutzfahrzeugs gelöst, bei welchem der Sitzunterbau eine eine Wälzkörperlagereinheit aufweisende Drehverstelleinrichtung zum Drehen zumindest des Sitzteils um eine Hochachse in Drehverstellrichtungen, eine Längsverstelleinrichtung mit zwei voneinander beabstandet angeordneten Längsschieneneinheiten zum Verstellen zumindest des Sitzteils in Längsverstellrichtungen und eine Querverstelleinrichtung mit zwei voneinander beabstandet angeordneten Querschieneneinheiten zum Verstellen zumindest des Sitzteils in Querverstellrichtungen umfasst, wobei die Drehverstellvorrichtung derart zwischen den zwei voneinander beabstandet angeordneten Längsschieneneinheiten oder den Querschieneneinheiten angeordnet ist, dass eine Höhenausdehnung der Drehverstellvorrichtung maximal 150% oder 100% einer Höhenausdehnung der Längsschieneneinheiten oder der Querschieneneinheiten beträgt. Erfindungsgemäß ist ein Wälzkörperkranzteil, vorzugsweise zwei oder mehr Wälzkörperkranzteile, der Wälzkörperlagereinheit in einem Bauraum zwischen den zwei voneinander beabstandet angeordneten Längsschieneneinheiten oder Querschieneneinheiten angeordnet, wobei der Bauraum seitlich von den Längsschieneneinheiten und/oder Querschieneneinheiten physikalisch begrenzt ist, wobei die Drehverstellvorrichtung oberhalb der zwei voneinander beabstandet angeordneten Längsschieneneinheiten und zwischen den zwei voneinander beabstandet angeordneten Querschieneneinheiten angeordnet ist

Durch diese erfindungsgemäße Anordnung wird die erforderliche Bauhöhe und der gesamte Bauraum zum Realisieren einer Drehverstelleinrichtung in Kombination mit einer Längs-und/oder Querverstelleinrichtung bei gleichem Funktionsumfang gegenüber bekannten Lösungen an dem vorliegenden Nutzfahrzeugsitz um mehr als 40% reduziert. Es wird vorteilhaft die Drehverstellvorrichtung nämlich sowohl hinsichtlich ihrer vertikalen als auch ihrer horizontalen Anordnung so angeordnet, dass Bauraum genutzt wird, welcher ohnehin bereits durch die Längs- oder Querverstelleinrichtung in Anspruch genommen ist. Insgesamt kann somit eine Horizontalbewegungsvorrichtung, welche vorzugsweise die Drehverstelleinrichtung, die Längsverstelleinrichtung und die Querverstelleinrichtung in sich vereint, mit einer deutlich verringerten Bauhöhe verwirklicht werden.
Vorteilhafterweise kann hierdurch entweder die Gesamtsitzhöhe des Nutzfahrzeugsitzes reduziert werden, oder es steht alternativ mehr Bauraum für eine darunterliegende Vertikalfederung zur Verfügung.
Die jeweils zwei zueinander beabstandet angeordneten Schieneneinheiten der vorliegenden Längs- bzw. Querverstelleinrichtungen befinden sich hierbei idealerweise auf einer gleichen Horizontalebene, sind also auf gleicher Höhe innerhalb des Sitzunterbaus eingebaut.
Darüber hinaus ist es vorteilhaft, wenn die Wälzkörperlagereinheit derart zwischen den zwei voneinander beabstandet angeordneten Längsschieneneinheiten oder den zwei voneinander beabstandet angeordneten Querschieneneinheiten angeordnet ist, dass eine Höhenausdehnung der Wälzkörperlagereinheit maximal 120% oder 100% einer Höhenausdehnung der Längsschieneneinheiten oder der Querschieneneinheiten beträgt. Hierdurch lässt sich die Gesamtsitzhöhe ebenfalls vorteilhaft reduzieren.
Die vorliegende Wälzkörperlagereinheit ist im Sinne der Erfindung durch wenigstens ein Wälzkörperkranzteil, vorzugsweise zwei Wälzkörperkranzteilen, definiert, mittels welchen eine Drehbewegung um die Hochachse ermöglicht wird.
Hinsichtlich anderer Ausführungsvarianten kann die Wälzkörperlagereinheit aber auch noch durch weitere Komponenten ergänzt sein.
Eine andere vorteilhafte Ausführungsvariante sieht vor, dass die Höhenausdehnung eines für die Drehverstellvorrichtung oder für die Wälzkörperlagereinheit vorgesehenen Bauraums durch eine von den Unterseiten der voneinander beabstandet angeordneten Längsschieneneinheiten aufgespannte untere fiktive Horizontalebene und durch eine von den Oberseiten der voneinander beabstandet angeordneten Längsschieneneinheiten aufgespannte obere fiktive Horizontalebene begrenzt ist. Insofern kann die Drehverstellvorrichtung zur Gänze oder zumindest die Wälzkörperlagereinheit hiervon in dem durch die Längsverstelleinrichtung formulierten Bauraum untergebracht werden, wodurch eine Horizontalbewegungsvorrichtung des Sitzunterbaus extrem niedrig bauend ausgeführt werden kann. Darüber hinaus ist der Bauraum physikalisch noch von den jeweiligen Schieneneinheiten begrenzt.

Vorteilhafterweise gelingt es vorliegend, wesentliche Bauteile insbesondere der Drehverstellvorrichtung besonders platzsparend in einen Bauraumbereich der Längsverstelleinrichtung oder der Querverstelleinrichtung zu integrieren, wodurch der umbauten Raum des vorliegenden Sitzunterbaus insgesamt wesentlich effektiver genutzt werden kann.

Eine hierzu alternative genauso vorteilhafte Ausführungsvariante sieht entsprechend vor, dass die Höhenausdehnung eines für die Drehverstellvorrichtung oder für die Wälzkörperlagereinheit vorgesehenen Bauraums durch eine von den Unterseiten der voneinander beabstandet angeordneten Querschieneneinheiten aufgespannte untere fiktive Horizontalebene und durch eine von den Oberseiten der voneinander beabstandet angeordneten Querschieneneinheiten aufgespannte obere fiktive Horizontalebene begrenzt ist. Auch hierdurch kann die Horizontalbewegungsvorrichtung des Sitzunterbaus extrem niedrig bauend ausgeführt werden.

Eine gegenüber dem Stand der Technik sehr kompakt bauende Horizontalbewegungsvorrichtung kann geschaffen werden, da das eine Wälzkörperkranzteil, vorzugsweise zwei oder mehr Wälzkörperkranzteile, der Wälzkörperlagereinheit in einem Bauraum zwischen den zwei voneinander beabstandet angeordneten Längsschieneneinheiten oder Querschieneneinheiten angeordnet ist.

Hierbei ist der Bauraum im Sinne der vorliegenden Erfindung hinsichtlich seiner Bauraumhöhe fiktiv durch eine von den Unterseiten der voneinander beabstandet angeordneten Längsschieneneinheiten oder Querschieneneinheiten aufgespannte untere fiktive Horizontalebene und durch eine von den Oberseiten der voneinander beabstandet angeordneten Längsschieneneinheiten oder Querschieneneinheiten aufgespannte obere fiktive Horizontalebene begrenzt. Darüber hinaus ist der Bauraum seitlich von den jeweiligen Schieneneinheiten physikalisch begrenzt.

An dieser Stelle sei noch erwähnt, dass eine Bauraumhöhe eines durch die Längsschieneneinheiten oder die Querschieneneinheiten definierten Bauraums zwischen den Längsschieneneinheiten oder den Querschieneneinheiten weniger als 45 mm, vorzugsweise weniger als 40 mm, beträgt. Aktuell wird eine Bauraumhöhe von 36 mm erreicht.

Besonders vorteilhaft verhält es sich, wenn eine kreisförmige Wälzkörperlaufbahn, vorzugsweise zwei oder mehr kreisförmige Wälzkörperlaufbahnen, zum Lagern von Wälzkörpern der Wälzkörperlagereinheit in einem Bauraum zwischen den zwei voneinander beabstandet angeordneten Längsschieneneinheiten oder Querschieneneinheiten angeordnet ist. Hierdurch kann die erforderliche Bauhöhe der Horizontalbewegungsvorrichtung weiter reduziert werden.

Der Bauraum zwischen den zwei voneinander beabstandet angeordneten Längsschieneneinheiten oder Querschieneneinheiten kann nochmals verbessert genutzt werden, wenn kumulativ eine Verriegelungseinrichtung zum Verriegeln einer Drehbewegung der Drehverstellvorrichtung in Bezug auf die Hochachse radial innen wenigstens eines Wälzkörperkranzteils der Wälzkörperlagereinheit angeordnet ist. Hierdurch kann die Verriegelungseinrichtung idealerweise komplett oder zumindest teilweise ebenfalls zwischen den zwei voneinander beabstandet angeordneten Längsschieneneinheiten oder Querschieneneinheiten platziert werden.

Erfindungsgemäß ist vorgesehen, dass die Drehverstellvorrichtung oberhalb der zwei voneinander beabstandet angeordneten Längsschieneneinheiten und zwischen den zwei voneinander beabstandet angeordneten Querschieneneinheiten angeordnet ist.

Es sei auch noch angemerkt, dass als Wälzkörper vorzugsweise Kugelkörper eingesetzt werden, so dass es sich vorliegend um eine entsprechende Kugellagereinheit handelt. Es können jedoch auch andere Wälzkörper verwendet werden.

Weitere Vorteile, Ziele und Eigenschaften vorliegender Erfindung werden anhand anliegender Zeichnung und nachfolgender Beschreibung erläutert, in welchen beispielhaft ein Nutzfahrzeugsitz mit einer zwischen zwei voneinander beabstandeten Querschieneneinheiten einer Querverstelleinrichtung angeordneten Drehverstelleinrichtung dargestellt und beschrieben ist. In der Zeichnung zeigen:
- Figur 1: schematisch eine perspektivische Ansicht eines Nutzfahrzeugsitzes mit einem eine Horizontalbewegungsvorrichtung umfassenden Sitzunterbau, welche eine Drehverstelleinrichtung aufweist, deren Kugellagereinheit zwischen zwei voneinander beabstandet angeordneten Querschieneneinheiten einer Querverstellein-richtung platziert ist;
- Figur 2: schematisch eine perspektivische Ansicht der Horizontalbewegungsvorrichtung des Sitzunterbaus des Nutzfahrzeugsitzes aus der Figur 1;
- Figur 3: schematisch eine Explosionsansicht der Horizontalbewegungsvorrichtung aus den Figuren 1 und 2;
- Figur 4: schematisch eine Aufsicht der Horizontalbewegungsvorrichtung aus den Figuren 1 bis 3; und
- Figur 5: schematisch eine Schnittansicht der Horizontalbewegungsvorrichtung aus den Figuren 1 bis 4 entlang der in der Figur 4 angedeuteten Schnittlinie O-O.

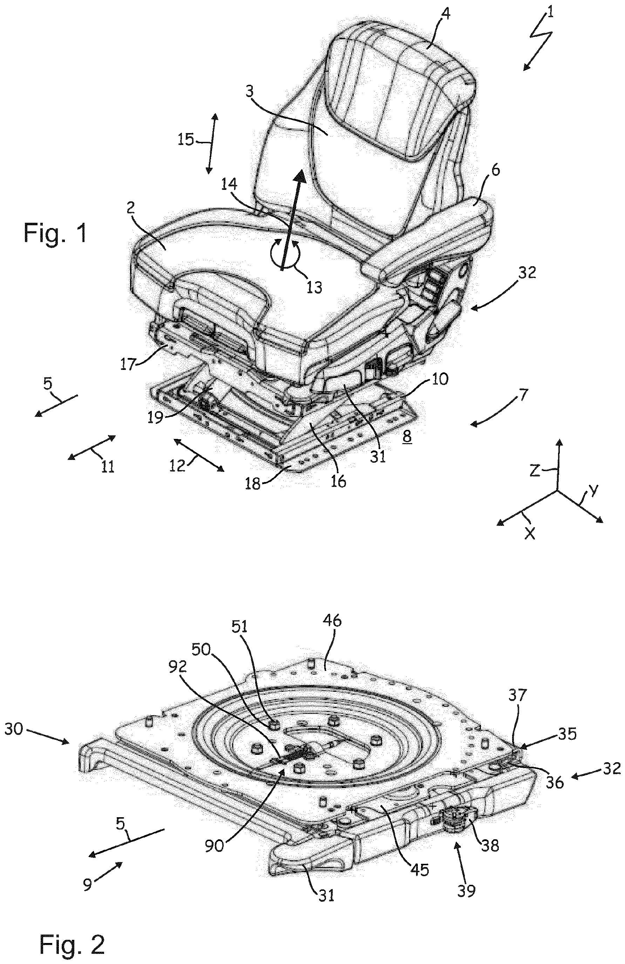

Der in der Figur 1 gezeigte Nutzfahrzeugsitz 1 umfasst ein Sitzteil 2 zum Daraufsitzen eines Fahrgastes und ein Rückenlehnenteil 3 zum rückseitigen Abstützen des Fahrgastes. Das Rückenlehnenteil 3 ist in diesem Ausführungsbeispiel mit einem Kopfstützenteil 4 ausgerüstet. In Vorwärtsfahrrichtung 5 gesehen ist rechts seitlich an dem Rückenlehnenteil 3 zusätzlich auch ein Armlehnenteil 6 befestigt. Des Weiteren umfasst der Nutzfahrzeugsitz 1 noch einen Sitzunterbau 7, mittels welchem der Nutzfahrzeugsitz 1 in seiner Gesamtheit an einem Karosserieteil 8, wie etwa einem Kabinenboden einer Nutzkraftfahrzeugkabine, befestigt ist.

Um den Nutzfahrzeugsitz 1 vielfältig an die unterschiedlichsten Einsatzerfordernisse des Fahrgastes anpassen und auch einen bestmöglichen Sitzkomfort bieten zu können, weist der Sitzunterbau 7 in diesem Ausführungsbeispiel eine Horizontalbewegungsvorrichtung 9 und eine Vertikalbewegungsvorrichtung 10 auf.

Mittels der Horizontalbewegungsvorrichtung 9 kann zumindest das Sitzteil 2 und damit verbundene Bauteile, wie beispielsweise das Rückenlehnenteil 3, translatorisch in Längsverstellrichtungen 11 (x-Achse) und translatorisch in Querverstellrichtungen 12 (y-Achse) sowie rotatorisch in Drehverstellrichtungen 13 um eine Hochachse 14 (z-Achse) bewegt werden, wie nachfolgend noch erläutert ist. Die Horizontalbewegungsvorrichtung 9 besitzt aufgrund ihrer kompakten Bauweise in diesem Ausführungsbeispiel lediglich eine sehr geringe Bauhöhe von 57 mm.

Mittels der Vertikalbewegungsvorrichtung 10 kann zumindest das Sitzteil 2 und damit verbundene Bauteile, wie eben das Rückenlehnenteil 3, translatorisch in Vertikalverstellrichtungen 15 bezüglich der Hochachse 14 bewegt werden. Hierzu umfasst die Vertikalbewegungsvorrichtung 10 ein Scherengestell 16, welches zwischen einer Deckenplatte 17, welche die Horizontalbewegungsvorrichtung 9 trägt, der Vertikalbewegungsvorrichtung 10 und einer Bodenplatte 18 der Vertikalbewegungsvorrichtung 10 derart angeordnet ist, dass die Horizontalbewegungsvorrichtung 9 gegenüber der Bodenplatte 18 vertikal beweglich gelagert ist. Des Weiteren umfasst die Vertikalbewegungsvorrichtung 10 noch eine Dämpfer-Federeinrichtung 19 zum Federn und Dämpfen einer Vertikalbewegung an dem Nutzfahrzeugsitz 1 in Vertikalrichtung 15.

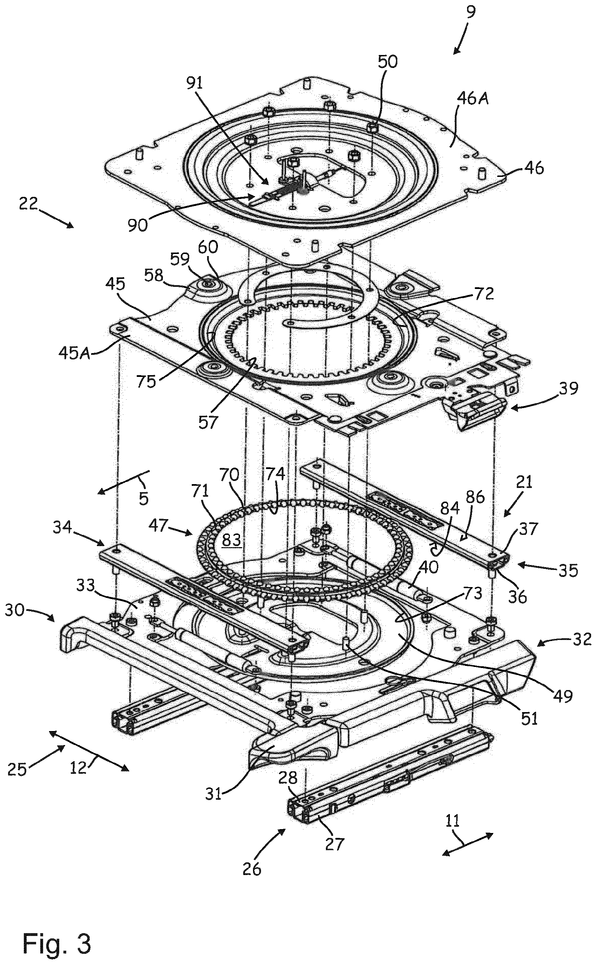

Die insbesondere in den Figuren 2 und 3 näher gezeigte Horizontalbewegungsvorrichtung 9 umfasst eine Längsverstelleinrichtung 20, eine Querverstelleinrichtung 21 und eine Drehverstelleinrichtung 22, um den Nutzfahrzeugsitz 1 im Sinne der vorgenannten Längsverstellrichtungen 11, Querverstellrichtungen 12 bzw. Drehverstellrichtungen 13 bewegen bzw. einstellen zu können. Die Horizontalbewegungsvorrichtung 9 kann in einem anderen nicht minder vorteilhaften Ausführungsbeispiel auch nur eine der Verstelleinrichtungen 20, 21 und 22 oder eine beliebig andere Kombination hiervon aufweisen.

Mittels der Längsverstelleinrichtung 20 kann ein vorderer Längsverstellweg von 120 mm und ein hinterer Längsverstellweg von 90 mm bezogen auf eine Neutrallängsposition erzielt werden, während mittels der Querverstelleinrichtung 21 ein Querverstellweg um eine Neutralquerposition von +/- 25 mm erreicht werden kann. Mittels der Drehverstelleinrichtung 22 kann um die Hochachse 14 herum in 7,5° Schritten jeweils eine Schwenkbewegung von 60° um eine Neutraldrehposition und/oder eine 180°-Drehung erreicht werden.

Die Längsverstelleinrichtung 20 umfasst im Wesentlichen eine rechte Längsschieneneinheit 25 und eine linke Längsschieneneinheit 26 (siehe Figur 3), wobei jede der Längsschieneneinheiten 25, 26 ein Führungsschienenelement 27 (nur exemplarisch beziffert) und ein Gleitschienenelement 28 (ebenfalls nur exemplarisch beziffert) umfasst. Das Führungsschienenelement 27 ist hierbei an der Deckenplatte 17 der Vertikalbewegungsvorrichtung 10 angeschraubt, und damit oberhalb der Vertikalbewegungsvorrichtung 10 zwischen dieser und dem Sitzteil 2 angeordnet.

Darüber hinaus ist der Längsverstelleinrichtung 20 in diesem Ausführungsbeispiel noch eine Doppelarretiereinheit 30 zugeordnet, mittels welcher das jeweilige Gleitschienenelement 28 an dem entsprechenden Führungsschienenelement 27 verriegelbar bzw. entriegelbar ist, so dass der Nutzfahrzeugsitz 1 in der Längsverstellrichtung 11 festgelegt oder bewegt werden kann.

Um die Doppelarretiereinheit 30 durch den Fahrgast manuell betätigen können, umfasst die Längsverstelleinrichtung 11 noch ein händisch betätigbares Greifelement 31, welches seitlich neben dem Sitzteil 2 in einer Betätigungskonsole 32 des Nutzfahrzeugsitzes 1 integriert angeordnet ist.

Die Gleitschienenelemente 28 der Längsschieneneinheiten 25 und 26, die Doppelarretiereinheit 30 und auch das händisch betätigbare Greifelement 31 mit seiner Mechanik sind an einem Basisträgerplattenteil 33 der Horizontalbewegungsvorrichtung 9 befestigt, an welchem ebenfalls Querschieneneinheiten 34 und 35 der Querverstelleinrichtung 21 befestigt sind. Jede der Querschieneneinheiten 34 und 35 weist ein Führungsschienenquerelement 36 und ein Gleitschienenquerelement 37 auf, um eine Bewegung gemäß der Seitenverstellrichtung 12 zu ermöglichen.

Darüber hinaus sind in den Darstellungen gemäß der Figuren 1 bis 3 noch weitere Komponenten der Querverstelleinrichtung 21 erkennbar, wie beispielsweise ein händisch betätigbares Hebelelement 38 (siehe insbesondere Figur 2) einer Verriegelungseinheit 39 zum Festlegen oder Lösen der Querverstelleinrichtung 21 sowie Dämpferelemente 40 (nur exemplarisch beziffert, siehe Figur 3) zum Dämpfen einer Lateralschwingung bei gelöster Querverstelleinrichtung 21.

Das jeweilige Führungsschienenquerelement 36 ist mit dem Basisträgerplattenteil 33 verschraubt ist, während das an dem Führungsschienenquerelement 36 entsprechend geführte Gleitschienenquerelement 37 jeweils an einem Unterschalenteil 45 angeordnet ist.

In diesem Ausführungsbeispiel gehört das Unterschalenteil 45 zu der Drehverstelleinrichtung 22 und bildet mit einem entsprechend geformten zweilagigen Oberschalenteil 46 eine Lagerung für eine Kugellagereinheit 47. Unterseitig wird die Kugellagereinheit 47 durch ein Deckelelement 49 komplettiert und geschützt, welches den zweiten Anteil des zweilagigen Oberschalenteils 46 bildet, und mit dessen Hilfe das Unterschalenteil 45, das Oberschalenteil 46 und damit auch die Kugellagereinheit 47 der Drehverstelleinrichtung 22 verspannt werden. Hierzu werden Schraubenmuttern 50 mit entsprechenden Gewindebolzen 51 des Deckelelements 49 verschraubt.

Des Weiteren gestaltet das Unterschalenteil 45 ein drehfestes Schalenfestteil 45A der Drehverstelleinrichtung 22 aus, welches drehfest in dem Sitzunterbau 7 integriert ist, während das vorliegende zweilagige Oberschalenteil 46 entsprechend ein gegenüber dem Schalenfestteil 45A drehbares Schalendrehteil 46A formuliert, welches mithilfe des Deckelelements 49 durch zwei Kugelkranzteile 70 und 71 der Kugellagereinheit 47 an dem Schalenfestteil 45A um die Hochachse 14 drehbar gelagert ist.

Darüber hinaus zeichnet sich die Kugellagereinheit 47 durch kreisförmige Kugellaufbahnen 72 und 73 (siehe Figur 3) aus, entlang welcher die Vielzahl an Kugeln 74 (hier nur exemplarisch beziffert) der Kugelkranzteile 70 und 71 rollen können, wenn sich das Schalendrehteil 46A um die Hochachse 14 dreht.

Insbesondere die erste kreisförmige Kugellaufbahn 72 ist durch eine in dem Schalenfestteil 45A eingepresste tellerförmige Ausnehmung 75 gebildet, wobei das Schalendrehteil 46A eine hierzu komplementäre Ausformung umfasst. Ähnlich verhält es sich bezüglich der zweiten kreisförmigen Kugellaufbahn 73 hinsichtlich des Deckelelements 49 (deshalb nicht gesondert beziffert).

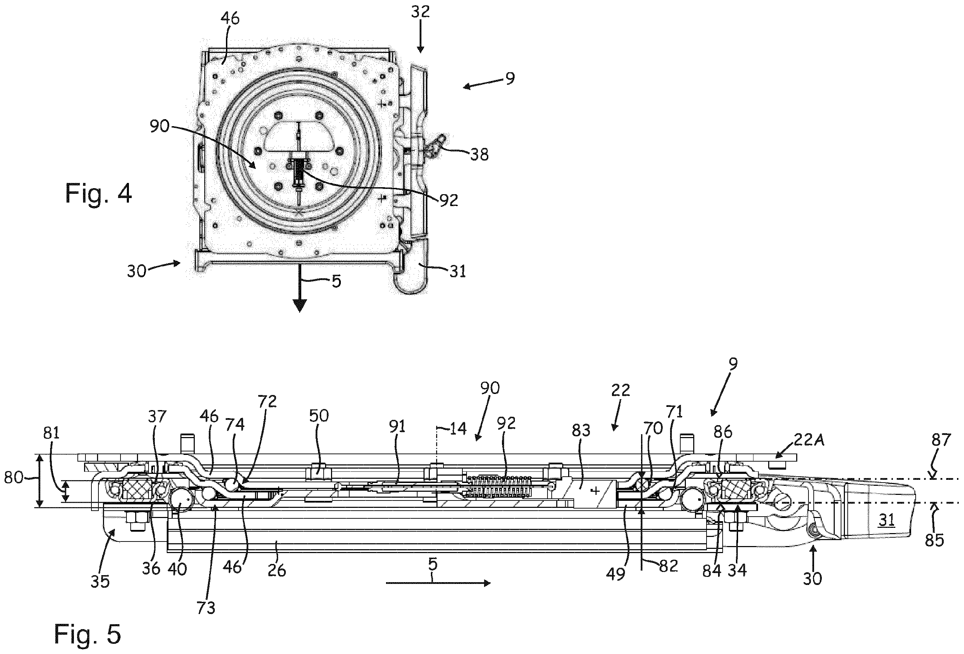

Die Querverstelleinrichtung 21 liegt im Wesentlichen auf einer horizontalen Höhe der Drehverstelleinrichtung 22, wodurch die Horizontalbewegungsvorrichtung 9 extrem flach baut, wie anschließend noch genauer erläutert ist, wie insbesondere aus der Darstellung gemäß der Figur 5 gut entnehmbar ist.

Im konkreten Fall bedeutet dies, dass die Drehverstellvorrichtung 22 derart zwischen den zwei voneinander beabstandet angeordneten Querschieneneinheiten 34, 35 angeordnet ist, dass eine Höhenausdehnung 80 der Drehverstellvorrichtung 22 maximal 140% einer Höhenausdehnung 81 der Querschieneneinheiten 34, 35 beträgt. Insofern ist die Drehverstellvorrichtung 22 sehr gut zwischen den zwei Querschieneneinheiten 34, 35 in die Querverstelleinrichtung 21 integriert. Lediglich Befestigungsbereiche 22A der Drehverstellvorrichtung 22, welche zum Befestigen mit weiteren Bauteilen, wie etwa dem Sitzteil 2 oder dergleichen, ragen über die Querschieneneinheiten 34, 35 hinaus.

Jedoch ist hierbei die Kugellagereinheit 47 derart zwischen den zwei voneinander beabstandet angeordneten Querschieneneinheiten 34, 35 angeordnet, dass eine Höhenausdehnung 82 der Kugellagereinheit 47 vorliegend 100% der Höhenausdehnung 81 der Querschieneneinheiten 34, 35 beträgt. Insofern kann die Kugellagereinheit 47, welche in diesem Ausführungsbeispiel aus dem ersten Kugelkranzteil 70 und dem zweiten Kugelkranzteil 71 besteht, komplett zwischen den zwei Querschieneneinheiten 34 und 35 eingegliedert werden, und verschwenden keinen zusätzlichen Bauraum in Richtung der z-Achse (siehe auch Figur 1).

Des Weiteren ist die Höhenausdehnung 81 eines für die Kugellagereinheit 47 vorgesehenen Bauraums 83 durch eine von den Unterseiten 84 der voneinander beabstandet angeordneten Querschieneneinheiten 34 und 35 aufgespannte untere fiktive Horizontalebene 85 (nur exemplarisch beziffert) und durch eine von den Oberseiten 86 der voneinander beabstandet angeordneten Querschieneneinheiten 34, 35 aufgespannte obere fiktive Horizontalebene 87 (nur exemplarisch beziffert) begrenzt.

Der Begriff "Horizontalebene" ist im Sinne der vorliegenden Erfindung derart zu verstehen, dass diese Ebene sich in Fahrzeugbreitenrichtung und in Fahrzeuglängsrichtung erstreckt und nur dann horizontal ausgerichtet ist, wenn das Nutzfahrzeug sich auf horizontal ausgerichtetem Untergrund befindet. Andernfalls neigt sich diese Ebene mit Neigung des gesamten Nutzfahrzeugs entsprechend der Fahrzeugbreiten- und Fahrzeuglängsrichtung.

Vorteilhafterweise sind nicht nur die beiden Kugelkranzteile 70 und 71 der Kugellagereinheit 47 in diesem Bauraum 83 untergebracht, sondern auch die beiden kreisförmigen Kugellaufbahnen 72 und 73, wobei Letztere bis an die obere und untere Bauraumgrenzen, welche jeweils mit der oberen bzw. unteren Horizontalebene 85 bzw. 86 zusammenfallen, verlaufend angeordnet sind. Hierdurch kann die vorliegende Horizontalbewegungsvorrichtung 9 noch niedriger ausgelegt werden.
Auch eine Verriegelungseinrichtung 90 zum Verriegeln einer Drehbewegung der Drehverstelleinrichtung 22, insbesondere mit einem Verriegelungselement 91 und mit einer Einrückfeder 92 und mit dem Zahnkranz, in welchem das Verriegelungselement 91 zum Verriegeln eingerückt wird, ist günstig in diesem Bauraum 83 arrangiert, so dass für diese Verriegelungseinrichtung 90 ebenfalls kein weiterer Höhenbauraum an der Horizontalbewegungsvorrichtung 9 benötigt wird.
In diesem Ausführungsbeispiel ist die Längsverstelleinrichtung 20 unterhalb der Querverstelleinrichtung 21 angeordnet, so dass Erstere zwischen der Querverstelleinrichtung 21 und der Vertikalbewegungsvorrichtung 10 platziert ist.
Je nachdem, ob es sich bei dem Nutzfahrzeugsitz 1 um einen Fahrersitz oder Beifahrersitz handelt, kann der Aufbau insbesondere des Sitzunterbaus 7 hinsichtlich der x-Achse auch spiegelbildlich ausgebildet sein, sprich: Die Betätigungskonsole 32 und insbesondere das händisch betätigbare Greifelement 31 kann anstatt auf der linken Nutzfahrzeugsitzseite auf der rechten Nutzfahrzeugsitzseite angeordnet sein.
Es versteht sich, dass es sich bei dem vorstehend erläuterten Ausführungsbeispiel lediglich um eine erste Ausgestaltung des erfindungsgemäßen Nutzfahrzeugsitzes handelt. Insofern beschränkt sich die Ausgestaltung der Erfindung nicht auf dieses Ausführungsbeispiel, sondern kann im Rahmen der nachstehenden Ansprüche abgewandelt werden.

### Bezugszeichenliste

- 1: Nutzfahrzeugsitz
- 2: Sitzteil
- 3: Rückenlehnenteil
- 4: Kopfstützenteil
- 5: Vorwärtsfahrrichtung
- 6: Armlehnenteil
- 7: Sitzunterbau
- 8: Karosserieteil
- 9: Horizontalbewegungsvorrichtung
- 10: Vertikalbewegungsvorrichtung
- 11: Längsverstellrichtungen
- 12: Querverstellrichtungen
- 13: Drehverstellrichtungen
- 14: Hochachse
- 15: Vertikalverstellrichtungen
- 16: Scherengestell
- 17: Deckenplatte
- 18: Bodenplatte
- 19: Dämpfer-Federeinrichtung
- 20: Längsverstelleinrichtung
- 21: Querverstelleinrichtung
- 22: Drehverstelleinrichtung
- 22A: Befestigungsbereiche
- 25: rechte Längsschieneneinheit
- 26: linke Längsschieneneinheit
- 27: Führungsschienenelement
- 28: Gleitschienenelement
- 30: Doppelarretiereinheit
- 31: Greifelement
- 32: Betätigungskonsole
- 33: Basisträgerplattenteil
- 34: vordere Querschieneneinheit
- 35: hintere Querschieneneinheit
- 36: Führungsschienenquerelement
- 37: Gleitschienenquerelement
- 38: Hebelelement
- 39: Verriegelungseinheit
- 40: Dämpferelemente
- 45: Unterschalenteil
- 45A: Schalenfestteil
- 46: Oberschalenteil
- 46A: Schalendrehteil
- 47: Wälzkörperlagereinheit
- 49: Deckelelement
- 50: Schraubenmuttern
- 51: Gewindebolzen
- 57: Zahnkranz
- 70: erstes Wälzkörperkranzteil
- 71: zweites Wälzkörperkranzteil
- 72: erste kreisförmige Wälzkörperlaufbahn
- 73: zweite kreisförmige Wälzkörperlaufbahn
- 74: Wälzkörpern
- 75: tellerförmige Ausnehmung
- 80: Höhenausdehnung der Drehverstellvorrichtung
- 81: Höhenausdehnung der Querschieneneinheiten
- 82: Höhenausdehnung der Wälzkörperlagereinheit
- 83: Bauraum
- 84: Unterseiten
- 85: untere Horizontalebene
- 86: Oberseiten
- 87: obere Horizontalebene
- 90: Verriegelungseinrichtung
- 91: Verriegelungselement
- 92: Einrückfeder

## Patentansprüche

1. Nutzfahrzeugsitz (1) mit einem Sitzteil (2), mit einem Rückenlehnenteil (3) und mit einem Sitzunterbau (7) zum Anordnen an einem Karosserieteil (8) eines Nutzfahrzeugs, bei welchem der Sitzunterbau (7) eine eine Wälzkörperlagereinheit (47) aufweisende Drehverstelleinrichtung (22) zum Drehen zumindest des Sitzteils (2) um eine Hochachse (14) in Drehverstellrichtungen (13), eine Längsverstelleinrichtung (20) mit zwei voneinander beabstandet angeordneten Längsschieneneinheiten (25, 26) zum Verstellen zumindest des Sitzteils (2) in Längsverstellrichtungen (11) und eine Querverstelleinrichtung (21) mit zwei voneinander beabstandet angeordneten Querschieneneinheiten (34, 35) zum Verstellen zumindest des Sitzteils (2) in Querverstellrichtungen (12) umfasst,
wobei die Drehverstellvorrichtung (22) derart zwischen den zwei voneinander beabstandet angeordneten Längsschieneneinheiten (25, 26) oder den Querschieneneinheiten (34, 35) angeordnet ist, dass eine Höhenausdehnung (80) der Drehverstellvorrichtung (22) maximal 150% oder 100% einer Höhenausdehnung (81) der Längsschieneneinheiten (25, 26) oder der Querschieneneinheiten (34, 35) beträgt,
wobei ein Wälzkörperkranzteil (70), vorzugsweise zwei oder mehr Wälzkörperkranzteile (70, 71), der Wälzkörperlagereinheit (47) in einem Bauraum (83) zwischen den zwei voneinander beabstandet angeordneten Längsschieneneinheiten (25, 26) oder Querschieneneinheiten (34, 35) angeordnet ist, wobei der Bauraum (83) seitlich von den Längsschieneneinheiten (25, 26) und/oder Querschieneneinheiten (34, 35) physikalisch begrenzt ist,
**dadurch gekennzeichnet, dass**
die Drehverstellvorrichtung (22) oberhalb der zwei voneinander beabstandet angeordneten Längsschieneneinheiten (25, 26) und zwischen den zwei voneinander beabstandet angeordneten Querschieneneinheiten (34, 35) angeordnet ist.

2. Nutzfahrzeugsitz (1) nach Anspruch 1,
**dadurch gekennzeichnet, dass**
die Wälzkörperlagereinheit (47) derart zwischen den zwei voneinander beabstandet angeordneten Längsschieneneinheiten (25, 26) oder den zwei voneinander beabstandet angeordneten Querschieneneinheiten (34, 35) angeordnet ist, dass eine Höhenausdehnung (82) der Wälzkörperlagereinheit (47) maximal 120% oder 100% einer Höhenausdehnung (81) der Längsschieneneinheiten (25, 26) oder der Querschieneneinheiten (34, 35) beträgt.

3. Nutzfahrzeugsitz (1) nach Anspruch 2,
**dadurch gekennzeichnet, dass**
die Wälzkörperlagereinheit (47) durch das wenigstens eine Wälzkörperkranzteil (70), vorzugsweise durch die zwei Wälzkörperkranzteile (70, 71), definiert ist.

4. Nutzfahrzeugsitz (1) nach einem der Ansprüche 1 bis 3,
**dadurch gekennzeichnet, dass**
die Höhenausdehnung eines für die Drehverstellvorrichtung (22) oder für die Wälzkörperlagereinheit (47) vorgesehenen Bauraums durch eine von den Unterseiten der voneinander beabstandet angeordneten Längsschieneneinheiten (25, 26) aufgespannte untere fiktive Horizontalebene und durch eine von den Oberseiten der voneinander beabstandet angeordneten Längsschieneneinheiten (25, 26) aufgespannte obere fiktive Horizontalebene begrenzt ist.

5. Nutzfahrzeugsitz (1) nach einem der Ansprüche 1 bis 3,
**dadurch gekennzeichnet, dass**
die Höhenausdehnung (81) eines für die Drehverstellvorrichtung (22) oder für die Wälzkörperlagereinheit (47) vorgesehenen Bauraums (83) durch eine von den Unterseiten (84) der voneinander beabstandet angeordneten Querschieneneinheiten (34, 35) aufgespannte untere fiktive Horizontalebene (85) und durch eine von den Oberseiten (86) der voneinander beabstandet angeordneten Querschieneneinheiten (34, 35) aufgespannte obere fiktive Horizontalebene (87) begrenzt ist.

6. Nutzfahrzeugsitz (1) nach einem der Ansprüche 1 bis 5,
**dadurch gekennzeichnet, dass**
eine kreisförmige Wälzkörperlaufbahn (72), vorzugsweise zwei oder mehr kreisförmige Wälzkörperlaufbahnen (72, 73), zum Lagern von Wälzkörpern (74) der Wälzkörperlagereinheit (47) in einem Bauraum (83) zwischen den zwei voneinander beabstandet angeordneten Längsschieneneinheiten (25, 26) oder Querschieneneinheiten (34, 35) angeordnet ist.

7. Nutzfahrzeugsitz (1) nach einem der Ansprüche 1 bis 6,
**dadurch gekennzeichnet, dass**
eine Verriegelungseinrichtung (90) zum Verriegeln einer Drehbewegung der Drehverstellvorrichtung (22) in Bezug auf die Hochachse (14) radial innen wenigstens eines Wälzkörperkranzteils (70, 71) der Wälzkörperlagereinheit (47) angeordnet ist.

8. Nutzfahrzeugsitz (1) nach einem der Ansprüche 1 bis 7,
**dadurch gekennzeichnet, dass**
eine Bauraumhöhe (81) eines durch die Längsschieneneinheiten (25, 26) oder die Querschieneneinheiten (34, 35) definierten Bauraum (83) zwischen den Längsschieneneinheiten (25, 26) oder den Querschieneneinheiten (34, 35) weniger als 45 mm, vorzugsweise weniger als 40 mm, beträgt.

## Claims

1. Commercial vehicle seat (1) comprising a seat part (2), a backrest part (3) and a seat substructure (7) for being arranged on a body part (8) of a commercial vehicle, in which the seat substructure (7) comprises a rotating adjustment device (22) comprising a rolling bearing unit (47) for rotating at least the seat part (2) about a vertical axis (14) in rotating adjustment directions (13), a longitudinal adjustment device (20) comprising two mutually spaced longitudinal rail units (25, 26) for adjusting at least the seat part (2) in longitudinal adjustment directions (11), and a transverse adjustment device (21) comprising two mutually spaced transverse rail units (34, 35) for adjusting at least the seat part (2) in transverse adjustment directions (12),
the rotating adjustment device (22) being arranged between the two mutually spaced longitudinal rail units (25, 26) or the transverse rail units (34, 35) such that a height extension (80) of the rotating adjustment device (22) is at most 150 % or 100 % of a height extension (81) of the longitudinal rail units (25, 26) or the transverse rail units (34, 35),
a rolling element rim part (70), preferably two or more rolling element rim parts (70, 71), of the rolling bearing unit (47) being arranged in an installation space (83) between the two mutually spaced longitudinal rail units (25, 26) or transverse rail units (34, 35), the installation space (83) being physically delimited at the sides by the longitudinal rail units (25, 26) and/or transverse rail units (34, 35),
**characterised in that**
the rotating adjustment device (22) is arranged above the two mutually spaced longitudinal rail units (25, 26) and between the two mutually spaced transverse rail units (34, 35).

2. Commercial vehicle seat (1) according to claim 1,
**characterised in that**
the rolling bearing unit (47) is arranged between the two mutually spaced longitudinal rail units (25, 26) or the two mutually spaced transverse rail units (34, 35) such that a height extension (82) of the rolling bearing unit (47) is at most 120 % or 100 % of a height extension (81) of the longitudinal rail units (25, 26) or the transverse rail units (34, 35).

3. Commercial vehicle seat (1) according to claim 2,
**characterised in that**
the rolling bearing unit (47) is defined by the at least one rolling element rim part (70), preferably by the two rolling element rim parts (70, 71).

4. Commercial vehicle seat (1) according to any of claims 1 to 3,
**characterised in that**
the height extension of an installation space provided for the rotating adjustment device (22) or for the rolling bearing unit (47) is delimited by a fictitious lower horizontal plane spanned by the lower faces of the mutually spaced longitudinal rail units (25, 26), and by a fictitious upper horizontal plane spanned by the upper faces of the mutually spaced longitudinal rail units (25, 26).

5. Commercial vehicle seat (1) according to any of claims 1 to 3,
**characterised in that**
the height extension (81) of an installation space (83) provided for the rotating adjustment device (22) or for the rolling bearing unit (47) is delimited by a fictitious lower horizontal plane (85) spanned by the lower faces (84) of the mutually spaced transverse rail units (34, 35), and by a fictitious upper horizontal plane (87) spanned by the upper faces (86) of the mutually spaced transverse rail units (34, 35).

6. Commercial vehicle seat (1) according to any of claims 1 to 5,
**characterised in that**
an circular rolling element track (72), preferably two or more circular rolling element tracks (72, 73), for storing the rolling elements (74) of the rolling bearing unit (47) being arranged in an installation space (83) between the two mutually spaced longitudinal rail units (25, 26) or transverse rail units (34, 35).

7. Commercial vehicle seat (1) according to any of claims 1 to 6,
**characterised in that**
a locking device (90) for locking a rotational movement of the rotating adjustment device (22) with respect to the vertical axis (14) is arranged radially inside at least one rolling element rim part (70, 71) of the rolling bearing unit (47).

8. Commercial vehicle seat (1) according to any of claims 1 to 7,
**characterised in that**
an installation space height (81) of an installation space (83), defined by the longitudinal rail units (25, 26) or the transverse rail units (34, 35), between the longitudinal rail units (25, 26) or the transverse rail units (34, 35) is less than 45 mm, preferably less than 40 mm.

## Revendications

1. Siège de véhicule utilitaire (1) avec une partie siège (2), avec une partie dossier (3) et avec une sous-structure de siège (7) pour la disposition sur une partie carrosserie (8) d'un véhicule utilitaire, dans lequel la sous-structure de siège (7) comporte un dispositif de réglage à rotation (22) présentant une unité de palier à corps de roulement (47) pour la rotation d'au moins la partie siège (2) autour d'un axe vertical (14) dans des directions de réglage à rotation (13), un dispositif de réglage longitudinal (20) avec deux unités de rail longitudinal (25, 26) disposées à distance l'une de l'autre pour le réglage d'au moins la partie siège (2) dans des directions de réglage longitudinal (11) et un dispositif de réglage transversal (21) avec deux unités de rail transversal (34, 35) disposées à distance l'une de l'autre pour le réglage d'au moins la partie siège (2) dans des directions de réglage transversal (12),
le dispositif de réglage à rotation (22) étant disposé entre les deux unités de rail longitudinal (25, 26) disposées à distance l'une de l'autre ou les deux unités de rail transversal (34, 35) de telle sorte qu'une étendue en hauteur (80) du dispositif de réglage à rotation (22) s'élève à un maximum de 150 % ou 100 % d'une étendue en hauteur (81) des unités de rail longitudinal (25, 26) ou des unités de rail transversal (34, 35),
une partie couronne de corps de roulement (70), de préférence au moins deux parties couronne de corps de roulement (70, 71), de l'unité de palier à corps de roulement (47) étant disposées dans un espace structural (83) entre les deux unités de rail longitudinal (25, 26) ou unités de rail transversal (34, 35) disposées à distance l'une de l'autre, l'espace structural (83) étant limité physiquement latéralement par les unités de rail longitudinal (25, 26) et/ou les unités de rail transversal (34, 35), **caractérisé par le fait que**
le dispositif de réglage à rotation (22) est disposé au-dessus des deux unités de rail longitudinal (25, 26) disposées à distance l'une de l'autre et entre les deux unités de rail transversal (34, 35) disposées à distance l'une de l'autre.

2. Siège de véhicule utilitaire (1) selon la revendication 1,
**caractérisé par le fait que**
l'unité de palier à corps de roulement (47) est disposée entre les deux unités de rail longitudinal (25, 26) disposées à distance l'une de l'autre ou les deux unités de rail transversal (34, 35) disposées à distance l'une de l'autre de telle sorte qu'une étendue en hauteur (82) de l'unité de palier à corps de roulement (47) s'élève à un maximum de 120 % ou 100 % d'une étendue en hauteur (81) des unités de rail longitudinal (25, 26) ou des unités de rail transversal (34, 35).

3. Siège de véhicule utilitaire (1) selon la revendication 2,
**caractérisé par le fait que**
l'unité de palier à corps de roulement (47) est définie par la au moins une partie couronne de corps de roulement (70), de préférence par les deux parties couronne de corps de roulement (70, 71).

4. Siège de véhicule utilitaire (1) selon l'une des revendications 1 à 3,
**caractérisé par le fait que**
l'étendue en hauteur d'un espace structural prévu pour le dispositif de réglage à rotation (22) ou pour l'unité de palier à corps de roulement (47) est limitée par un plan horizontal fictif inférieur défini par les côtés inférieurs des unités de rail longitudinal (25, 26) disposées à distance l'une de l'autre et par un plan horizontal fictif supérieur défini par les côtés supérieurs des unités de rail longitudinal (25, 26) disposées à distance l'une de l'autre.

5. Siège de véhicule utilitaire (1) selon l'une des revendications 1 à 3,
**caractérisé par le fait que**
l'étendue en hauteur (81) d'un espace structural (83) prévu pour le dispositif de réglage à rotation (22) ou pour l'unité de palier à corps de roulement (47) est limitée par un plan horizontal fictif inférieur (85) défini par les côtés inférieurs (84) des unités de rail transversal (34, 35) disposées à distance l'une de l'autre et par un plan horizontal fictif supérieur (87) défini par les côtés supérieurs (86) des unités de rail transversal (34, 35) disposées à distance l'une de l'autre.

6. Siège de véhicule utilitaire (1) selon l'une des revendications 1 à 5,
**caractérisé par le fait que**
un chemin de roulement à corps de roulement circulaire (72), de préférence au moins deux chemins de roulement à corps de roulement circulaires (72, 73), sont disposés dans un espace structural (83) entre les deux unités de rail longitudinal (25, 26) ou unités de rail transversal (34, 35) disposées à distance l'une de l'autre pour le montage de corps de roulement (74) de l'unité de palier à corps de roulement (47).

7. Siège de véhicule utilitaire (1) selon l'une des revendications 1 à 6,
**caractérisé par le fait que**
un dispositif de verrouillage (90) pour le verrouillage d'un mouvement de rotation du dispositif de réglage à rotation (22) est disposé radialement sur l'intérieur d'au moins une partie couronne de corps de roulement (70, 71) de l'unité de palier à corps de roulement (47) par rapport à l'axe vertical (14).

8. Siège de véhicule utilitaire (1) selon l'une des revendications 1 à 7,
**caractérisé par le fait que**
une hauteur d'espace structural (81) d'un espace structural (83) défini par les unités de rail longitudinal (25, 26) ou les unités de rail transversal (34, 35) entre les unités de rail longitudinal (25, 26) ou les unités de rail transversal (34, 35) s'élève à moins de 45 mm, de préférence à moins de 40 mm.
